# EUROPEAN PATENT SPECIFICATION

(11) **EP 4 109 988 B1**
(45) Date of publication and mention of the grant of the patent: **11.11.2026**
(21) Application number: 20920459.3
(22) Date of filing: 21.02.2020
(51) Int. Cl.: H04W 72/04, H04L 5/00

(54) **TERMINAL, WIRELESS COMMUNICATION METHOD, AND BASE STATION**
BENUTZERENDGERÄT, DRAHTLOSKOMMUNIKATIONSVERFAHREN UND BASISSTATION
TERMINAL, PROCÉDÉ DE COMMUNICATION SANS FIL ET STATION DE BASE

(43) Date of publication of application: 28.12.2022
(73) Proprietor: NTT DOCOMO, INC., Chiyoda-Ku Tokyo 100-6150 (JP)
(72) Inventor: TAKAHASHI, Yuki, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2020/007083
(87) International publication number: WO 2021/166225

(56) References cited:
- EP-A1- 3 706 352
- EP-A1- 4 109 987
- WO-A1-2019/093841
- JP-A- 2020 502 859
- VIVO: "PUSCH enhancements for URLLC", vol. RAN WG1, no. e-Meeting; 20200224 - 20200306, 14 February 2020 (2020-02-14), XP052343392, Retrieved from the Internet <URL:https://ftp.3gpp.org/tsg_ran/WG1_RL1/TSGR1_100_e/Docs/R1-2000327.zip R1-2000327.docx> [retrieved on 20200214]
- ZTE ET AL: "Remaining issues for slot format", vol. RAN WG1, no. Sanya, China; 20180416 - 20180420, 15 April 2018 (2018-04-15), XP051426087, Retrieved from the Internet <URL:http://www.3gpp.org/ftp/Meetings%5F3GPP%5FSYNC/RAN1/Docs/> [retrieved on 20180415]
- NTT DOCOMO, INC.: "Remaining issues for PUSCH enhancements for Rel.16 URLLC", 3GPP DRAFT; R1-2000921, vol. RAN WG1, 14 February 2020 (2020-02-14), pages 1 - 10, XP051853100
- ANONYMOUS: "3rd Generation Partnership Project; Technical Specification Group Radio Access Network; NR; Medium Access Control (MAC) protocol specification (Release 15)", 3GPP STANDARD; TECHNICAL SPECIFICATION; 3GPP TS 38.321, vol. RAN WG2, no. V15.8.0, 7 January 2020 (2020-01-07), pages 1 - 78, XP051860530
- APPLE INC.: "Remaining issues on PUSCH enhancements", 3GPP DRAFT; R1-2000856, vol. RAN WG1, 15 February 2020 (2020-02-15), pages 1 - 4, XP051853474

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, 3GPP Rel. 8 to Rel. 14), a user terminal (User Equipment (UE)) transmits uplink control information (UCI) by using at least one of a UL data channel (for example, a Physical Uplink Shared Channel (PUSCH)) and a UL control channel (for example, a Physical Uplink Control Channel (PUCCH)).

Non-Patent Literature 2 describes PUSCH enhancements for URLLC.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non-Patent Literature 2: VIVO, "PUSCH enhancements for URLLC", 3GPP DRAFT; R1 -2000327
Non-patent Literature 3:ZTE ET AL, "Remaining issues for slot format",3GPP DRAFT; R1-1803792

### Summary of Invention

### Technical Problem

In 3GPP Rel. 15, repetitive transmissions of a UL data channel (for example, a PUSCH) are supported. A UE performs control so as to perform transmission of the PUSCH through a plurality of slots (for example, K consecutive slots) on the basis of a repetition factor K configured from a network (for example, a base station). In other words, when the repetitive transmissions are performed, each PUSCH is transmitted in a different slot (for example, units of slots).

On the other hand, for Rel. 16 (or later versions), performing a plurality of PUSCH transmissions in one slot when performing repetitive transmissions of a PUSCH is under study. In other words, transmission of each PUSCH is performed in units shorter than the slot (for example, units of sub-slots or units of mini-slots).

In this case, it is also assumed that a symbol (for example, a DL symbol or the like) unavailable for PUSCH transmission is included in the slot. Thus, in addition to information related to a slot format indicating a direction of transmission of each symbol, notifying the UE of information related to the symbol (or a symbol pattern) unavailable for the PUSCH transmission is also under study.

However, how to control UL transmission of a PUSCH or the like when the information related to the slot format and information related to an invalid symbol pattern are notified has not been fully studied.

Thus, an object of the present disclosure is to provide a terminal, a radio communication method, and a base station that can appropriately control UL transmission even when an invalid symbol pattern is notified to the terminal.

### Solution to Problem

This object is accomplished by the subject-matter of the independent claims. The dependent claims concern particular embodiments. Advantageous Effects of Invention

According to one aspect of the present disclosure, it is possible to appropriately control UL transmission even when an invalid symbol pattern is notified to a terminal.

### Brief Description of Drawings

FIGS. 1A and 1B are each a diagram to show an example of repetitive transmissions of a PUSCH;
FIG. 2 is a diagram to show another example of the repetitive transmissions of the PUSCH;
FIGS. 3A and 3B are diagrams to show an example of invalid symbol pattern information and actual transmission control;
FIG. 4 is a diagram to show an example of the invalid symbol pattern information and the actual transmission control;
FIGS. 5A and 5B are diagrams to show an example of a case where a plurality of configured grants are configured;
FIG. 6 is a diagram to show an example of a case where the invalid symbol pattern information and a dynamic SFI conflict with each other;
FIG. 7 is a diagram to show an example of UL transmission control in the case where the invalid symbol pattern information and the dynamic SFI conflict with each other;
FIG. 8 is a diagram to show another example of the UL transmission control in the case where the invalid symbol pattern information and the dynamic SFI conflict with each other;
FIG. 9 is a diagram to show another example of the UL transmission control in the case where the invalid symbol pattern information and the dynamic SFI conflict with each other;
FIG. 10 is a diagram to show another example of the UL transmission control in the case where the invalid symbol pattern information and the dynamic SFI conflict with each other;
FIG. 11 is a diagram to show another example of the UL transmission control in a case where invalid symbol pattern information and a dynamic SFI conflict with each other;
FIG. 12 is a diagram to show an example of a schematic structure of a radio communication system according to one embodiment;
FIG. 13 is a diagram to show an example of a structure of a base station according to one embodiment;
FIG. 14 is a diagram to show an example of a structure of a user terminal according to one embodiment; and
FIG. 15 is a diagram to show an example of a hardware structure of the base station and the user terminal according to one embodiment.

### Description of Embodiments

### (Slot Format)

For NR, semi-static or dynamic control of a format for respective slots (slot format) is under study. Here, the slot format may include at least one of one or more downlink (DL) symbols, one or more uplink (UL) symbols, and one or more flexible symbols. It can also be said that the slot format indicates a combination of communication directions of respective symbols in a slot.

Specifically, in NR, a UE is assumed to semi-statically or dynamically control communication directions (at least one of UL (Uplink), DL (Downlink), and Flexible) of at least one of slots and symbols in a slot.

Communication directions (also referred to as a format, a configuration, and so on) of a given number of consecutive slots or respective symbols in the consecutive slots is also referred to as a slot configuration, a time division duplex (TDD) UL-DL configuration (TDD-UL-DL configuration (tdd-UL-DL-Configuration)), and so on.

Information related to the TDD-UL-DL configuration (TDD-UL-DL configuration information) may be notified (configured) to the UE by higher layer signaling from a base station. Note that the higher layer signaling may be rephrased as a higher layer parameter.

The TDD-UL-DL configuration information may be given in a cell-specific (common to one or more groups including the UE (UE-group common)) manner, or may be given in a UE-specific manner.

For example, the cell-specific TDD-UL-DL configuration information may be, for example, "tdd-UL-DL-ConfigurationCommon" or "tdd-UL-DL-ConfigurationCommon2" of an RRC information element (IE). The cell-specific TDD-UL-DL configuration information may include information indicating at least one of the followings.
- Reference subcarrier spacing (µ*_{ref}*)
- A pattern periodicity (slot configuration period P) in DL and UL
- The number (d*ₛₗₒₜ*) of slots with only DL symbols (full DL slots)
- The number (d*_{symb}*) of consecutive DL symbols in a slot following the full DL slots
- The number (u*ₛₗₒₜ*) of slots with only UL symbols (full UL slots)
- The number (d*_{symb}*) of UL symbols following the full UL slots

The UE-specific TDD-UL-DL configuration information may be, for example, "tdd-UL-DL-ConfigDedicated" of the RRC iE. The UE-specific TDD-UL-DL configuration information may include information indicating at least one of the following.
- One or more sets of slot configurations for overriding assignment of at least one of UL and DL given by the cell-specific TDD-UL-DL configuration information
- Slot indices given by respective slot configurations
- Communication directions of symbols in a slot given by respective slot configurations (for example, all symbols in the slot are DL symbols or all symbols in the slot are UL symbols, and symbols for which DL symbols or UL symbols are not explicitly designated are flexible symbols)

When the cell-specific TDD-UL-DL configuration information is given, the UE may determine, on the basis of the cell-specific TDD-UL-DL configuration information, a slot format for each slot across a given number of slots.

When the above-described UE-specific TDD-UL-DL configuration information is given in addition to the above-described cell-specific TDD-UL-DL configuration information, the UE may override (modify or change), on the basis of the UE-specific TDD-UL-DL configuration information, flexible symbols in a given number of slots designated by the above-described cell-specific TDD-UL-DL configuration information.

Such a slot format configured on the basis of at least one of the cell-specific TDD-UL-DL configuration information and UE-specific TDD-UL-DL configuration information may be referred to as a Semi-static TDD pattern, a semi-static slot format, a semi-static pattern, and so on.

For NR, identification information (for example, a slot format combination index) of a combination (slot format combination) of one or more slot formats (or one or more SFIs) notified to the UE is under study. Note that the slot format combination index is also referred to as a slot format combination identifier, a slot format identifier (Slot Format Indicator (SFI)) index, an SFI-index, a given ID (a given ID), a given index (a given index), and so on.

The slot format combination index may be included in DCI (for example, DCI format 2_0) transmitted by a downlink control channel (also referred to as, for example, a Physical Downlink Control Channel (PDCCH), a group common (GC) PDCCH, and so on). Note that "DCI format" and "DCI" may be used interchangeably.

Such a slot format notified by the DCI may be referred to as a dynamic slot format, a dynamic SFI, and so on.

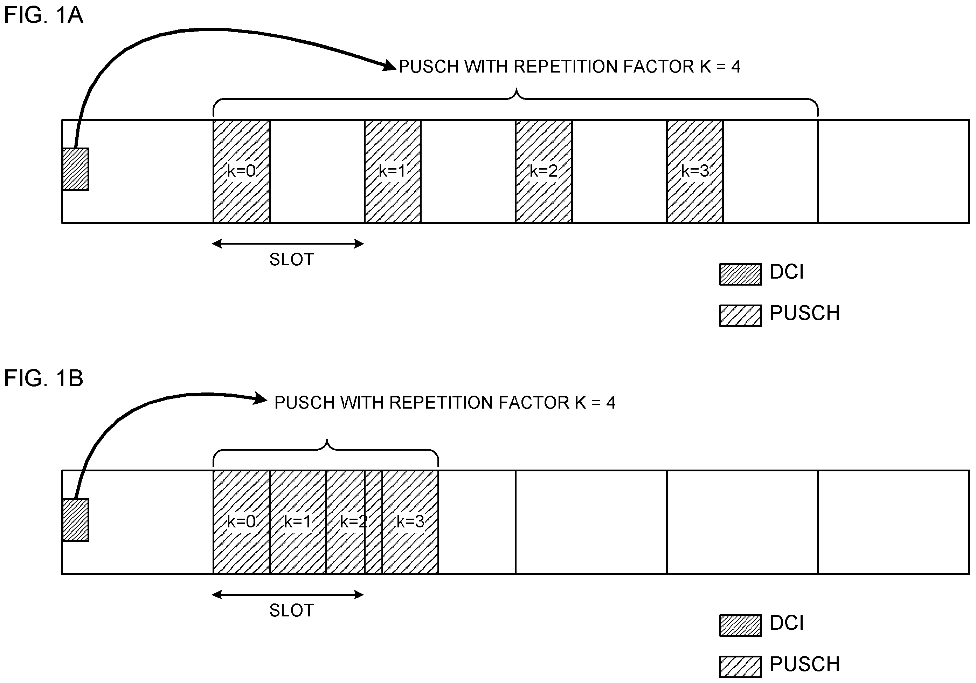

The slot format may indicate communication directions (for example, D, U, and F) of respective symbols in one slot. In FIG. 1, "D" indicates a DL symbol, "U" indicates a UL symbol, and "F" indicates a symbol (flexible symbol) in which any one of DL or UL may be performed.

### (Repetitive Transmissions)

In Rel. 15, repetitive transmissions are supported in data transmission. For example, a base station (network (NW) or gNB) repetitively performs transmissions of DL data (for example, downlink shared channels (PDSCHs)) a given number of times. Alternatively, a UE performs repetitions of UL data (for example, an uplink shared channel (PUSCH)) a given number of times.

FIG. 1A is a diagram to show an example of repetitive transmissions of the PUSCH. FIG. 1A shows an example in which the PUSCH with a given number of repetitions is scheduled by single DCI. The number of the repetitions is also referred to as a repetition factor K or an aggregation factor K.

In FIG. 1A, the repetition factor K = 4, but a value of K is not limited to this. The n-th repetition is also referred to as an n-th transmission occasion or the like, and may be identified by a repetition index k (0 ≤ k ≤ K - 1). FIG. 1A shows repetitive transmissions of a PUSCH (for example, a dynamic grant-based PUSCH) dynamically scheduled by the DCI, but the repetitive transmissions may be applied to repetitive transmissions of a configured grant-based PUSCH.

For example, in FIG. 1A, the UE receives information (for example, aggregationFactorUL or aggregationFactorDL) indicating the repetition factor K by higher layer layer signaling. Here, for example, the higher layer signaling may be any one of RRC (Radio Resource Control) signaling, MAC (Medium Access Control) signaling, broadcast information, and the like, or combinations of these.

For example, the MAC signaling may use a MAC control element (MAC CE), a MAC PDU (Protocol Data Unit), and the like. For example, the broadcast information may be a master information block (MIBs), a system information block (SIB), minimum system information (RMSI (Remaining Minimum System Information)), and the like.

The UE controls PDSCH reception processing (for example, at least one of reception, demapping, demodulation, and decoding) or PUSCH transmission processing (for example, at least one of transmission, mapping, modulation, and coding) in K consecutive slots on the basis of at least one field value (or information indicated by the field value) below in the DCI:
- allocation of time domain resources (for example, a start symbol, the number of symbols in each slot, or the like),
- allocation of frequency domain resources (for example, a given number of resource blocks (RBs) or a given number of resource block groups (RBGs)),
- modulation and coding scheme (MCS) index,
- configuration of PDSCH demodulation reference signal (DMRS), and
- transmission configuration indication (TCI (Transmission Configuration Indication or Transmission Configuration Indicator)) state (TCI state (TCI-state)).

Mapping of identical symbol may be applied between the K consecutive slots. FIG. 1A shows a case where a PUSCH in each slot is mapped to a given number of symbols from the head of the slot. Mapping of the identical symbol between slots may be determined as described in the above-described time domain resource allocation.

For example, the UE may determine symbol mapping in each slot on the basis of a start symbol S and the number of symbols L determined on the basis of a value m of a given field (for example, a TDRA field) in the DCI. Note that the UE may determine the first slot on the basis of K2 information determined on the basis of a value m of the given field (for example, the TDRA field) of the DCI.

On the other hand, between the K consecutive slots, redundancy versions (RVs) applied to a TB based on identical data may be identical, or may be at least partially different from each other. For example, an RV applied to the TB in the n-th slot (transmission occasion or repetition) may be determined on the basis of a value of a given field (for example, an RV field) in the DCI.

When resources allocated in the K consecutive slots have different communication directions in UL, DL, or Flexible and at least one symbol of each slot designated by at least one of uplink/downlink communication direction indication information for TDD control (for example, "TDD-UL-DL-ConfigCommon" or "TDD-UL-DL-ConfigDedicated" of RRC IE) and a Slot format indicator of DCI (for example, DCI format 2_0), it may be assumed that resources of a slot including the symbol are not transmitted (or received).

In Rel. 15, as shown in FIG. 1A, a PUSCH is repetitively transmitted through a plurality of slots (in units of slots), but in Rel. 16 (or later versions), it is assumed that repetitive transmissions of a PUSCH are performed in units shorter than the slot (for example, units of sub-slots, units of mini-slots, or units of a given number of symbols) (see FIG. 1B).

For example, the UE performs a plurality of PUSCH transmissions in one slot. When the repetitive transmissions are performed in units of sub-slots, depending on the number of repetitive transmissions (for example, K), a data allocation unit (data length in each repetitive transmission), and the like, a case where one transmission among a plurality of repetitive transmissions crosses a slot boundary (slot-boundary) occurs. In FIG. 1B, a PUSCH with k = 2 is arranged across the slot boundary. In such a case, the PUSCH is divided (or segmented) by the slot boundary as a reference for transmission.

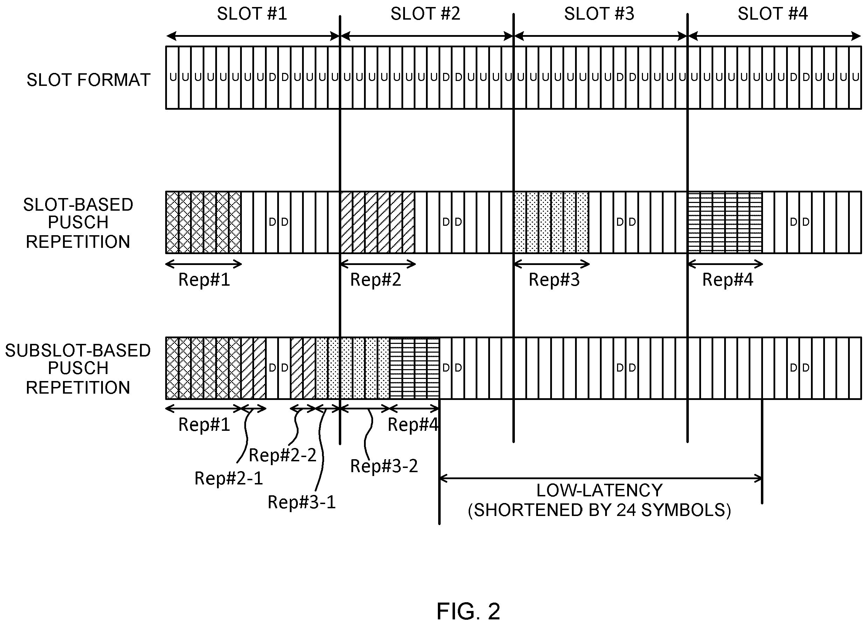

A case where a symbol (for example, a DL symbol or the like) unavailable for PUSCH transmission is included in the slot is also assumed. In such a case, it is assumed that the PUSCH transmission is performed by using symbols except the DL symbol. For example, in symbols to which a PUSCH is mapped, when the DL symbol is included in the middle symbol, the PUSCH transmission may be performed such that the PUSCH is not mapped to the DL symbol portion. In this case, the PUSCH may be divided (or segmented) (see FIG. 2).

FIG. 2 shows a case where a PUSCH with k = 1 (Rep #2) is divided into two portions (Reps #2-1 and #2-2) by DL symbols and a PUSCH with k = 2 (Rep #3) is divided into two portions (Reps #3-1 and #3-2) by a slot boundary in sub-slot-based repetitive transmissions. Note that the sub-slot-based repetitive transmissions as shown in FIG. 2 may be referred to as a repetitive transmission type B (for example, PUSCH repetition Type B).

Performing repetitive transmissions of a PUSCH on a sub-slot basis allows the repetitive transmissions of the PUSCH to be completed more quickly as compared to a case where the repetitive transmissions are performed in units of slots.

FIG. 2 shows a case where UL symbols (U) and DL symbols (D) are notified as a slot format, but formats other than that (for example, flexible symbols (F) for which DL or UL symbols are not explicitly designated) may be notified. In the flexible symbols, the UE may perform UL transmission or DL transmission, or may perform a specific operation (or restrict a specific operation). Information related to the slot format may be notified by at least one of higher layer signaling and DCI (for example, dynamic SFI).

### <Invalid Symbol Pattern>

When the repetitive transmission type B is applied to PUSCH transmission, notifying the UE of information related to a symbol (or a symbol pattern) unavailable for the PUSCH transmission is also under study. The symbol pattern unavailable for the PUSCH transmission may be referred to as an invalid symbol pattern and the like.

For repetitive transmissions of a dynamic grant-based PUSCH dynamically scheduled by the DCI, notifying the invalid symbol pattern by using at least one of the higher layer signaling and the DCI is under study. The DCI may be in a given DCI format (for example, at least one of DCI formats 0_1 and 0_2).

For example, information related to the invalid symbol pattern unavailable for the PUSCH transmission is notified by using a first higher layer parameter. Whether the information related to the invalid symbol pattern is applied may be notified to the UE by using the DCI. In this case, a bit field (a notification field for notifying whether the invalid symbol pattern is applied) for indicating whether the information related to the invalid symbol pattern is applied may be configured for the DCI.

Whether the notification field (or additional bits) in the DCI is configured may be notified to the UE by using a second higher layer parameter. In other words, the UE may, when the information related to the invalid symbol pattern is notified by the first higher layer parameter, determine the presence or absence of the application of the information related to the invalid symbol pattern on the basis of the second higher layer parameter and the DCI.

When the first higher layer parameter is not notified or configured, the UE may control the PUSCH transmission without considering the invalid symbol pattern. As the slot format, symbols notified by higher layer signaling or the like may be used as flexible symbols (F) for the PUSCH transmission. In this case, segmentation of the PUSCH may be controlled on the basis of at least one of a DL symbol and a slot boundary. As to symbols to which the PUSCH is mapped, the UE performs control, when a symbol notified as the DL symbol is present, so as not to use the symbol for the PUSCH transmission.

When the first higher layer parameter is notified or configured, the UE may determine(judge) whether the invalid symbol pattern is applied on the basis of the second higher layer parameter and the DCI. For example, when addition of additional bits (or a given field) to indicate whether the invalid symbol pattern is applied for the DCI is indicated by the second higher layer parameter, the UE may determine whether the invalid symbol pattern is applied on the basis of the given field.

When the given field of the DCI is a first value (for example, zero), it may be indicated that the invalid symbol pattern notified by the first higher layer parameter is not applied. In this case, the UE controls the PUSCH transmission without considering invalid symbol pattern information. For example, as the slot format, symbols notified by higher layer signaling or the like as flexible symbols (F) may be used for the PUSCH transmission. In this case, segmentation of the PUSCH may be controlled on the basis of at least one of a DL symbol and a slot boundary. As to the symbols to which the PUSCH is mapped, the UE performs control, when a symbol notified as the DL symbol is present, so as not to use the symbol for the PUSCH transmission.

When the given field of the DCI is a second value (for example, one), it may be indicated that the invalid symbol pattern notified by the first higher layer parameter is applied. In this case, the UE controls the PUSCH transmission in consideration of the invalid symbol pattern information. For example, the UE performs control so as not to use DL symbols and symbols notified as invalid symbols for the PUSCH transmission. In this case, segmentation of the PUSCH may be controlled on the basis of at least one of the DL symbol, invalid symbol pattern, and slot boundary. As to the symbols to which the PUSCH is mapped, the UE performs control so as to perform the PUSCH transmission by using symbols other than the DL symbols and the symbols notified as invalid symbols.

When the addition of additional bits (or a given field) to indicate whether the invalid symbol pattern is applied for the DCI is not indicated by the second higher layer parameter or when the second higher layer parameter is not notified, the UE may apply the invalid symbol pattern.

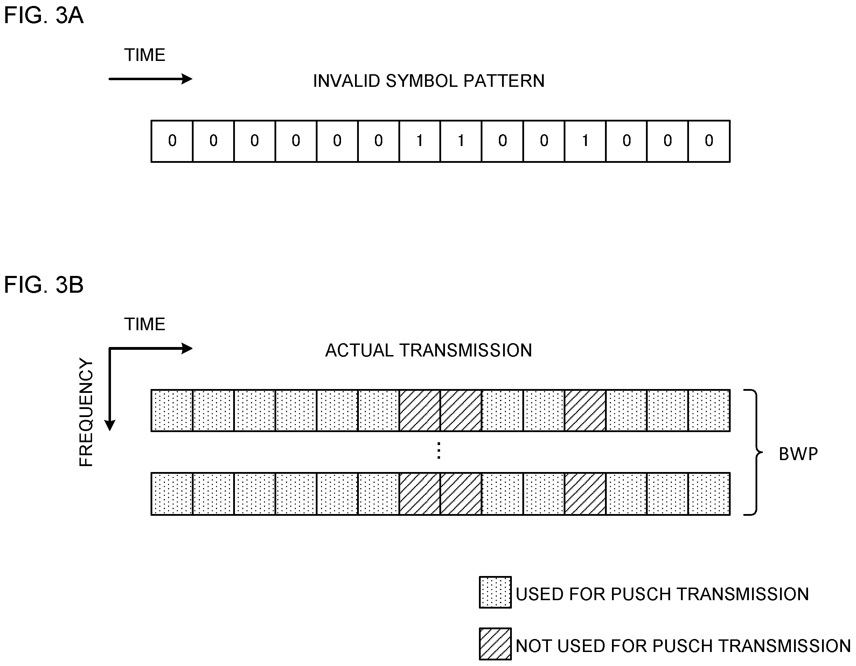

It is only necessary that the first higher layer parameter is information to notify a symbol pattern invalid for PUSCH transmission, and, for example, a bitmap form may be applied (see FIG. 3A). FIG. 3A is a diagram to show an example of a case where the invalid symbol pattern is defined by a bitmap (1-D bitmap) in relation to a time domain. The UE may determine, on the basis of information related to the invalid symbol pattern, resources available for the PUSCH transmission in one or more frequency bandwidths (for example, BWPs) (see FIG. 3B).

FIG. 3B shows a case where one or common invalid symbol pattern is applied to a plurality of BWPs, but a different invalid symbol pattern may be configured or applied for each BWP.

Note that a scheme used for notification of a pattern of a rate match pattern (rateMatchPattern) in a time domain for PDSCHs may be applied to the first higher layer parameter.

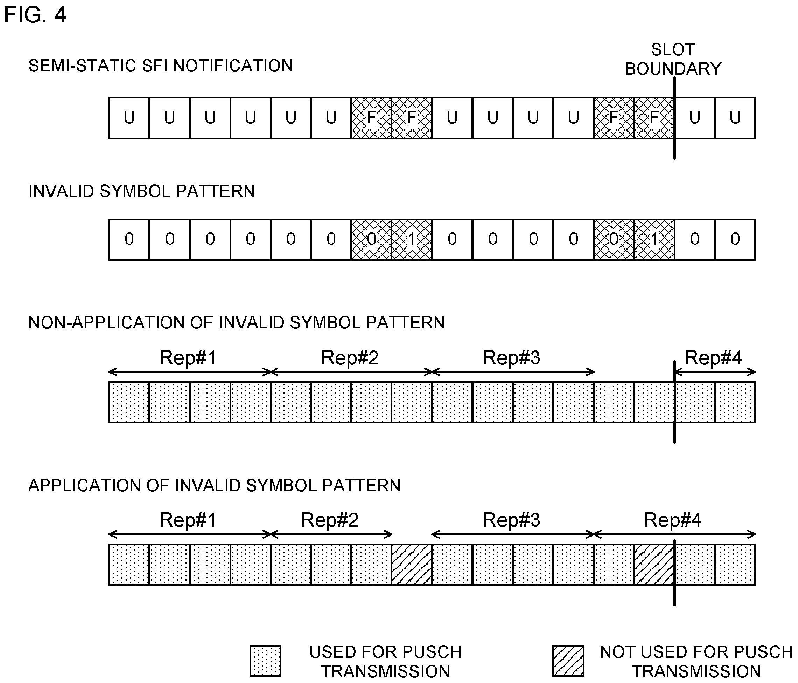

FIG. 4 shows an example of a case where actual transmission is controlled on the basis of slot format information and invalid symbol pattern information. FIG. 4 shows PUSCH transmission control without application of an invalid symbol pattern and PUSCH transmission control with the application in a case where slot format information (for example, semi-static SFI) notified by a higher layer parameter and information related to the invalid symbol pattern is notified.

When the invalid symbol pattern is not applied, the UE may perform control so as to use a symbol designated as Flexible (F) by the slot format information for the PUSCH transmission.

When the invalid symbol pattern is applied, the UE may perform control so as to use a symbol designated as Flexible (F) by the slot format information and designated as non-invalid by the invalid symbol pattern information (for example, a bit value "0" is configured) for the PUSCH transmission. On the other hand, the UE may perform control so as not to use a symbol designated as Flexible (F) by the slot format information and designated as being invalid by the invalid symbol pattern information (for example, a bit value "1" is configured) for the PUSCH transmission.

### <Configured Grant-based Transmission (Type 1 and Type 2)>

Incidentally, it is assumed that a repetition type B is supported for configured grant-based PUSCH transmission in addition to dynamic grant-based PUSCH transmission.

Dynamic grant-based transmission is a method for performing UL transmission by using an uplink shared channel (for example, a PUSCH (Physical Uplink Shared Channel)) on the basis of a dynamic UL grant (dynamic grant).

Configured grant-based transmission is a method for performing UL transmission by using an uplink shared channel (for example, a PUSCH) on the basis of a UL grant configured by a higher layer (which may be referred to as, for example, a configured grant, a configured UL grant, and so on). In the configured grant-based transmission, UL resources have already been allocated to the UE and the UE can perform UL transmission autonomously by using configured resources, and thus achievement of low-latency communication can be expected.

The dynamic grant-based transmission may be referred to as a dynamic grant-based PUSCH, UL transmission with a dynamic grant, a PUSCH with a dynamic grant, UL transmission with a UL grant, UL grant-based transmission, UL transmission (for which transmission resources are configured) scheduled by a dynamic grant, and so on.

The configured grant-based transmission may be referred to as a configured grant-based PUSCH, UL transmission with a configured grant (UL Transmission with configured grant), a PUSCH with a configured grant (PUSCH with configured grant), UL transmission without a UL grant (UL Transmission without UL grant), UL grant-free transmission, UL transmission (for which transmission resources are configured) scheduled by a configured grant, and so on.

The configured grant-based transmission may be defined as one kind of UL semi-persistent scheduling (SPS). In the present disclosure, the "configured grant," "SPS," "SPS/configured grant," and the like may be interchangeably interpreted.

For the configured grant-based transmission, several types (Type 1, Type 2, and the like) are under study.

In configured grant type 1 transmission, parameters used for the configured grant-based transmission (which may be referred to as configured grant-based transmission parameters, configured grant parameters, and so on) are configured for the UE by only using higher layer signaling.

In configured grant type 2 transmission, the configured grant parameters are configured for the UE by the higher layer signaling. In the configured grant type 2 transmission, at least a part of the configured grant parameters may be notified to the UE by physical layer signaling (for example, downlink control information (DCI) for activation mentioned below).

Here, for example, the higher layer signaling may be any one of RRC (Radio Resource Control) signaling, MAC (Medium Access Control) signaling, broadcast information, and the like, or combinations of these.

For example, the MAC signaling may use a MAC control element (MAC CE), a MAC PDU (Protocol Data Unit), and the like. The broadcast information may be, for example, a master information block (MIB), a system information block (SIB), minimum system information (RMSI (Remaining Minimum System Information)), other system information (OSI), or the like.

The configured grant parameters may be configured for the UE by using a ConfiguredGrantConfig information element of RRC. The configured grant parameters may include, for example, information to specify configured grant resources. The configured grant parameters may include, for example, information related to a configured grant index, a time offset, a periodicity, the number of repetitive transmissions of a transport block (TB) (the number of the repetitive transmissions may be expressed as K), a redundancy version (RV) sequence used in repetitive transmissions, the above-mentioned timer, and the like.

Here, the periodicity and the time offset may each be expressed in units of symbols, slots, subframes, frames, or the like. The periodicity may be indicated by, for example, a given number of symbols. The time offset may be indicated by, for example, an offset for timing of a given index (slot number = 0 and/or system frame number = 0 or the like). The number of the repetitive transmissions may be an arbitrary integer, and may be, for example, 1, 2, 4, 8, or the like. When the number of the repetitive transmissions is n (> 0), the UE may perform configured grant-based PUSCH transmission for a given TB by using n transmission occasions.

The UE may, when the configured grant type 1 transmission is configured, determine that one or a plurality of configured grants have been triggered. The UE may perform PUSCH transmission by using a configured resource for configured grant-based transmission (which may be referred to as a configured grant resource, a transmission occasion, and so on). Note that even when the configured grant-based transmission is configured, the UE may skip the configured grant-based transmission when there is no data in a transmit buffer.

The UE may, when the configured grant type 2 transmission is configured and a given activation signal is notified, determine that one or a plurality of configured grants have been triggered (or activated). The given activation signal (DCI for activation) may be DCI (PDCCH) CRC (Cyclic Redundancy Check)-scrambled by a given identifier (for example, a CS-RNTI (Configured Scheduling RNTI)). Note that the DCI may be used for control for deactivation, retransmission, or the like of the configured grant.

The UE may determine, on the basis of the above-described given activation signal, whether to perform the PUSCH transmission by using the configured grant resource configured by a higher layer. The UE may release (which may be referred to as deactivate, and so on), on the basis of DCI to deactivate a configured grant or expiration of a given timer (elapse of given period of time), a resource (PUSCH) corresponding to the configured grant.

Note that even when the configured grant-based transmission is activated (in an active state), the UE may skip the configured grant-based transmission when there is no data in a transmit buffer.

Note that each of the dynamic grant and configured grant may be referred to as an actual UL grant. In other words, the actual UL grant may be higher layer signaling (for example, a ConfiguredGrantConfig information element of RRC), physical layer signaling (for example, the above-described given activation signal), or a combination of these.

### <Configured Grant-based Configuration>

In existing radio communication systems (for example, Rel. 15 (or earlier versions)), a configured grant (for example, UL CG configuration or ConfiguredGrantConfig) configured for one cell (or carrier or BWP) has been limited to one configured grant. In contrast, in future radio communication systems (for example, Rel. 16 (or later versions)), configuring a plurality of configured grants for one BWP (or carrier or cell) is under study. As an example, configuration of a given number (for example, up to 12) of configured grants may be supported for each BWP.

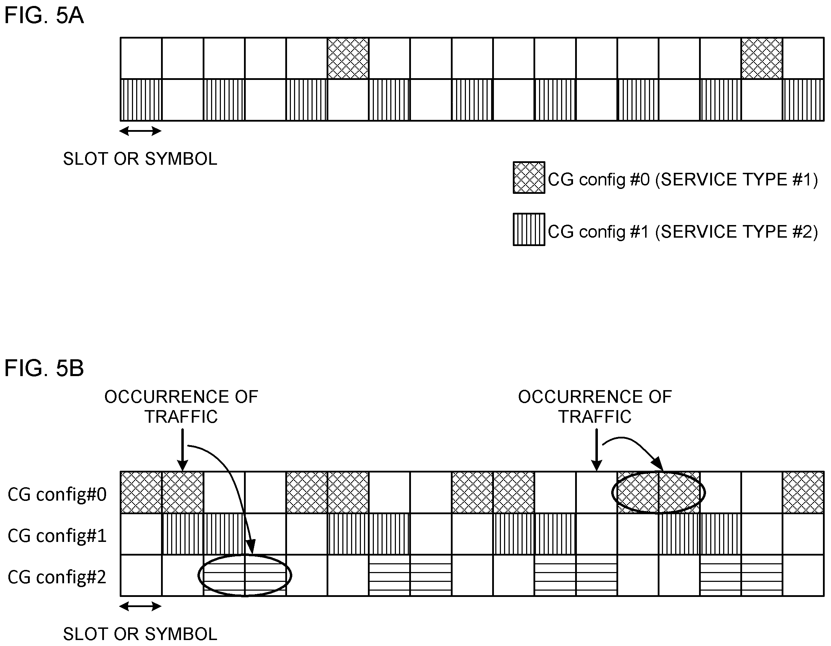

FIG. 5A shows a case where configured grants (CG config) are configured separately for each of a plurality of service types (here, two service types). Specifically, FIG. 4A shows a case where a first configured grant (CG config #0) is configured for service type #1 (for example, Voice service) and a second configured grant (CG config #1) is configured for service type #2 (for example, low-latency service). The first configured grant and the second configured grant may be configured with different conditions (for example, periodicities, transmission occasions, or the like) for PUSCH transmission from each other.

FIG. 5B shows a case where a plurality of configured grants (here, CG config #0 to #2) corresponding to different transmission occasions are configured. The UE may select one configured grant from the plurality of the configured grants (here, CG config #0 to #2) to perform the PUSCH transmission on the basis of a timing at which traffic has occurred.

For example, the UE may, when traffic has occurred, select a configured grant configuration capable of transmitting the traffic (PUSCH) on the basis of a condition with low-latency and a greater number of repetitions to control the PUSCH transmission. FIG. 5B shows a case where CG config #2 is used for traffic that has first occurred and CG config #1 is used for traffic that has subsequently occurred.

As mentioned above, in the future radio communication systems, it is assumed that notification or configuration of an invalid symbol (or invalid symbol pattern) is supported for the PUSCH transmission. However, when the invalid symbol pattern is supported, the inventors of the present invention focused on the following cases that have not been fully studied.

When information related to the invalid symbol pattern and information related to the slot format (for example, a dynamically notified dynamic SFI) conflict with each other, how to control the PUSCH transmission is an issue. Here, the conflict corresponds to a case where validity of PUSCH transmission notified by the information related to the invalid symbol pattern for a given symbol and validity of PUSCH transmission notified by the slot format information for the given symbol are different from each other.

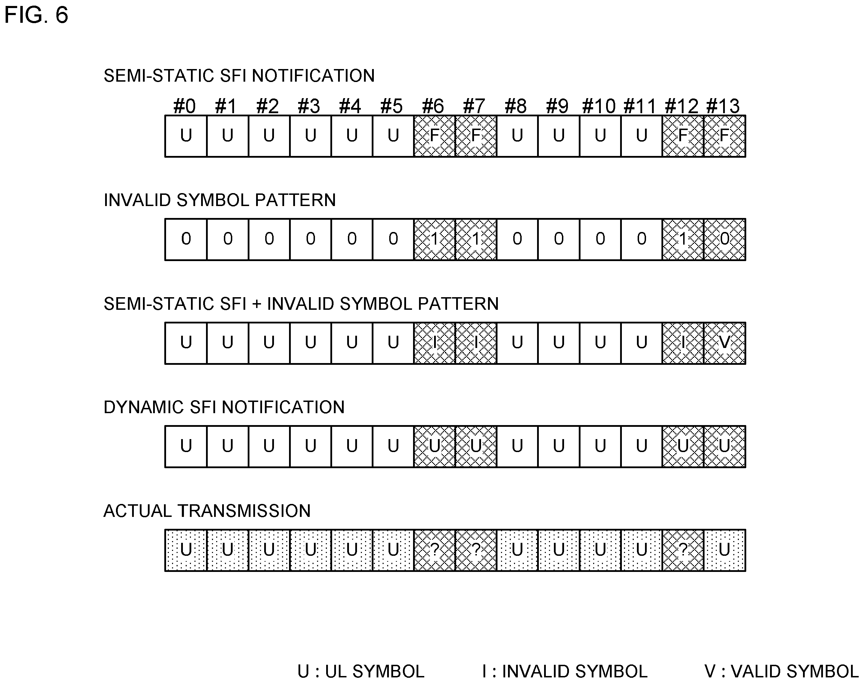

For example, when UL is notified by the slot format (for example, the dynamic SFI) for a symbol for which PUSCH transmission being invalid is notified by the invalid symbol pattern, how to control PUSCH transmission in the symbol is an issue (see FIG. 6).

FIG. 6 shows an example of a case where actual transmission is controlled on the basis of semi-statically notified slot format information (semi-static SFI), invalid symbol pattern information, and dynamically notified slot format information (dynamic SFI). FIG. 6 shows a case where UL is notified by slot format information notified by DCI for symbols (for example, symbols #6, #7, and #12) determined to be invalid (I) in consideration of the semi-static SFI and invalid symbol pattern information notified by higher layer parameter. In such a case, how to control UL transmission (for example, PUSCH transmission) in symbols #6, #7, and #12 is an issue.

Alternatively, when DL or Flexible is notified by the slot format (for example, the dynamic SFI) for a symbol for which PUSCH transmission being valid is notified by the invalid symbol pattern, how to control PUSCH transmission in the symbol is an issue.

The inventors of the present invention studied how to control the PUSCH transmission in such a case, and came up with the idea of one aspect of the present embodiment. For example, when different contents with respect to validity of PUSCH transmission in a given symbol is notified by information related to the invalid symbol pattern and information related to the slot format (for example, the dynamic SFI), the UE may control PUSCH transmission in the symbol on the basis of at least one piece of the information.

Hereinafter, embodiments according to the present disclosure will be described in detail with reference to the drawings. Aspects according to respective embodiments may each be employed individually, or may be employed in combination. Note that aspects below can be applied to at least one of dynamic grant-based PUSCH transmission and configured grant-based PUSCH transmission.

### (First Aspect)

In a first aspect, a case where when invalid symbol pattern information and dynamically notified slot format information (for example, a dynamic SFI) conflict with each other, PUSCH transmission is controlled on the basis of the slot format information will be described.

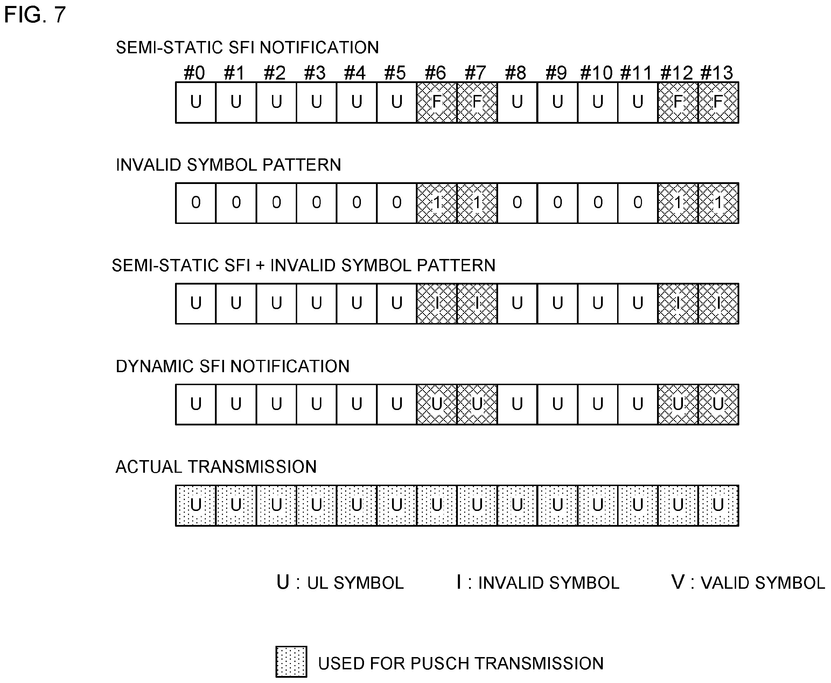

When UL is notified by a slot format (for example, a dynamic SFI) for a symbol for which PUSCH transmission being invalid is notified by an invalid symbol pattern, a UE may control PUSCH transmission to be performed in the symbol (see FIG. 7). In other words, the UE may, when invalid symbol pattern information and dynamic slot format information conflict with each other, prioritize application of the dynamic slot format information.

FIG. 7 shows an example of a case where actual transmission is controlled on the basis of semi-statically notified slot format information (semi-static SFI), invalid symbol pattern information, and dynamic slot format information (dynamic SFI).

A base station may configure the slot format (semi-static SFI) and the invalid symbol pattern for the UE by using a higher layer parameter. FIG. 7 shows a case where UL is configured by the semi-static SFI for symbols #0 to #5 and symbols #8 to #11 and Flexible is configured by the semi-static SFI for symbols #6, #7, #12, and #13. FIG. 7 shows a case where valid ("0") for PUSCH transmission is configured by the invalid symbol pattern information for UL symbols #0 to #5 and UL symbols #8 to #11 and invalid ("1") for PUSCH transmission is configured by the invalid symbol pattern information for flexible symbols #6, #7, #12, and #13.

Considering the semi-static SFI and the invalid symbol pattern information, UL symbols #0 to #5 and UL symbols #8 to #11 are valid (V) for PUSCH transmission and flexible symbols #6, #7, #12, and #13 are invalid (I) for PUSCH transmission.

When UL is notified by the dynamic SFI for symbols determined to be valid (V) (for example, UL symbols #0 to #5 and UL symbols #8 to #11), the UE performs control so as to perform PUSCH transmission in the symbols. When UL is notified by the dynamic SFI also for symbols determined to be invalid (I) (for example, flexible symbols #6, #7, #12, and #13), the UE may control PUSCH transmission to be performed in the symbols.

Thus, when the invalid symbol pattern information and the dynamic SFI conflict with each other, controlling PUSCH transmission by prioritizing information notified by the dynamic SFI allows to perform control so as to dynamically switch between the PUSCH transmission being valid and not valid.

### (Second Aspect)

In a second aspect, a case where when invalid symbol pattern information and dynamically notified slot format information (for example, a dynamic SFI) conflict with each other, PUSCH transmission is controlled on the basis of the invalid symbol pattern information will be described.

In a case where an invalid symbol pattern is configured (or applied), a UE may employ at least one of the following option 2-1 to option 2-2 to control the PUSCH transmission when dynamic slot format information (dynamic SFI) is notified.

### <Option 2-1>

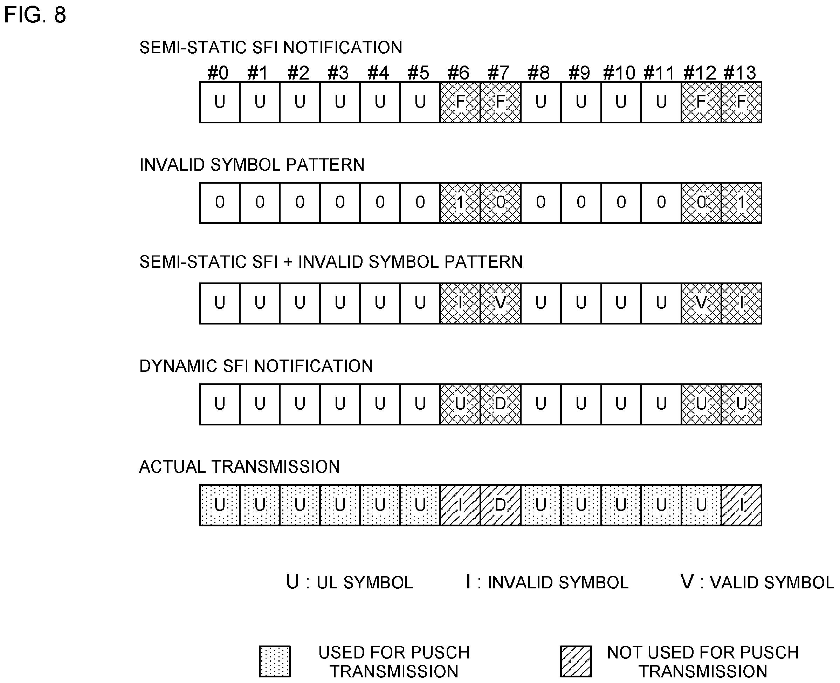

When UL is notified by a slot format (for example, a dynamic SFI) for a symbol for which PUSCH transmission being invalid is notified by the invalid symbol pattern, the UE may control PUSCH transmission not to be performed in the symbol (see FIG. 8). In other words, the UE may, when invalid symbol pattern information and dynamic slot format information conflict with each other, prioritize application of the invalid symbol pattern information.

FIG. 8 shows an example of a case where actual transmission is controlled on the basis of semi-statically notified slot format information (semi-static SFI), invalid symbol pattern information, and dynamic slot format information (dynamic SFI).

A base station may configure the slot format (semi-static SFI) and the invalid symbol pattern for the UE by using a higher layer parameter. FIG. 8 shows a case where UL is configured by the semi-static SFI for symbols #0 to #5 and symbols #8 to #11 and Flexible is configured by the semi-static SFI for symbols #6, #7, #12, and #13. FIG. 8 shows a case where valid of PUSCH transmission is configured by the invalid symbol pattern information for symbols #0 to #6 and symbols #8 to #12 and invalidity of PUSCH transmission is configured by the invalid symbol pattern information for symbols #6 and #13.

Considering the semi-static SFI and the invalid symbol pattern information, flexible symbols #7 and #12 are valid (V) for PUSCH transmission and flexible symbols #6 and #13 are invalid (I) for PUSCH transmission.

When UL is notified by the dynamic SFI for symbols determined to be valid (V) (for example, UL symbols ##0 to #5, UL symbols #8 to #11, and flexible symbol #12), the UE controls PUSCH transmission to be performed in the symbols. When UL is notified by the dynamic SFI for symbols determined to be invalid (I) (for example, symbols #6 and #13), the UE may control PUSCH transmission not to be performed in the symbols.

On the other hand, when DL is notified by the dynamic SFI for a symbol determined to be valid (V) (for example, flexible symbol #7), the UE controls PUSCH transmission not to be performed in the symbol.

Thus, the UE may prioritize the invalid symbol pattern information (or ignore the dynamic SFI) for symbols that are notified as being invalid (I) by the invalid symbol pattern information and for which UL is notified by the dynamic SFI. On the other hand, with respect to a given symbol, even when the invalid symbol pattern information and the dynamic SFI conflict with each other, the UE may prioritize the dynamic SFI (for example, PUSCH transmission is not performed) when the dynamic SFI notifies anything other than UL (or when the dynamic SFI notifies DL).

Therefore, it is possible to appropriately control PUSCH transmission even when the invalid symbol pattern and the dynamic SFI conflict with each other. PUSCH transmission is not performed in a symbol to which DL is notified by the dynamic SFI, and thus an occurrence of a discrepancy between recognition by the UE and recognition by the base station can be suppressed.

### <Option 2-2>

In all symbols in which the invalid symbol pattern information and the dynamic SFI conflict with each other, the invalid symbol pattern information may be prioritized (or the dynamic SFI may be ignored). Alternatively, the UE may, when the invalid symbol pattern is configured (or applied), prioritize the invalid symbol pattern information (or ignore the dynamic SFI) for all symbols even when the dynamic SFI is notified.

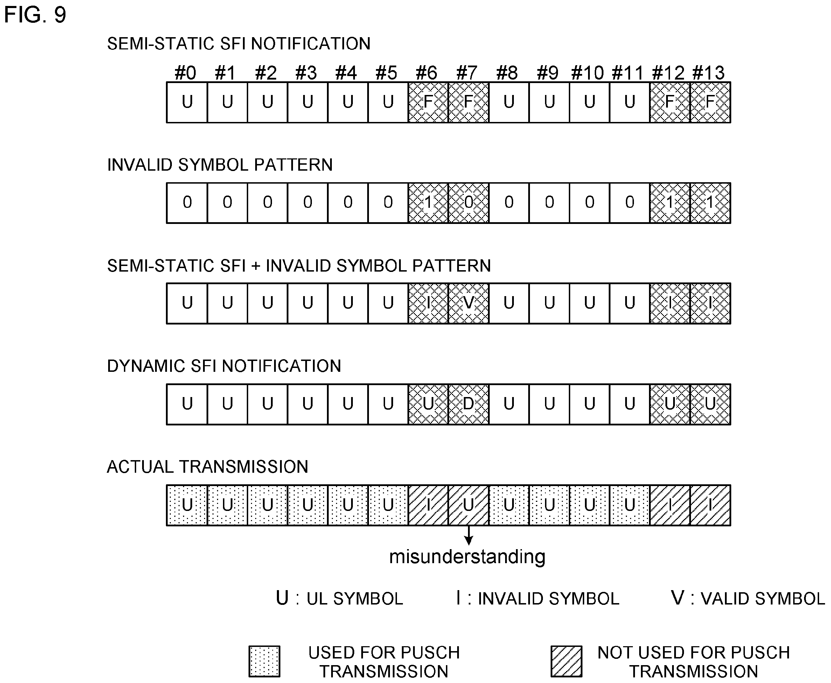

FIG. 9 shows a case where UL is configured by the semi-static SFI for symbols #0 to #5 and symbols #8 to #11 and Flexible is configured by the semi-static SFI for symbols #6, #7, #12, and #13. FIG. 9 shows a case where valid for PUSCH transmission is configured by the invalid symbol pattern information for UL symbols #0 to #5, UL symbols #8 to #11, and flexible symbol #7 and invalid for PUSCH transmission is configured by the invalid symbol pattern information for symbols #6, #7, #12, and #13.

Considering the semi-static SFI and the invalid symbol pattern information, flexible symbol #7 is valid (V) for PUSCH transmission and flexible symbols #6, #12, and #13 are invalid (I) for PUSCH transmission.

For symbols determined to be valid (V) (for example, UL symbols #0 to #5, UL symbols #8 to #11, and flexible symbol #7), the UE may control PUSCH transmission to be performed by assuming UL regardless of contents notified by the dynamic SFI (or in ignorance of the dynamic SFI).

Note that in this case, when the PUSCH transmission is performed assuming a symbol (here, flexible symbol #7) notified as DL by the dynamic SFI is UL, it is also assumed that a discrepancy (misunderstanding) between a communication direction assumed by the base station and a communication direction assumed by the UE occurs.

Thus, the UE may follow notification of the dynamic SFI (PUSCH transmission is not performed assuming DL) for a given symbol notified as being valid by the invalid symbol pattern information and notified as DL by the dynamic SFI out of symbols in which the invalid symbol pattern information and the dynamic SFI conflict with each other. In this case, the UE may perform control so as to prioritize the invalid symbol pattern information (or ignore the dynamic SFI) in symbols except the given symbol.

### <Variations>

The invalid symbol pattern information and the dynamic SFI may be controlled so as not to conflict with each other. For example, the UE may assume that a symbol notified as being invalid by the invalid symbol pattern is not notified as UL by the dynamic SFI. In other words, the UE may assume that anything other than UL (for example, at least one of DL and Flexible) is notified by the dynamic SFI for the symbol notified as being invalid by the invalid symbol pattern.

The base station may perform control so that UL is not designated by the dynamic SFI for a symbol configured as being invalid by the invalid symbol pattern.

The UE may assume that a symbol notified as being valid by the invalid symbol pattern is not notified as DL (or Flexible) by the dynamic SFI. In other words, the UE may assume that UL is notified by the dynamic SFI for the symbol notified as being valid by the invalid symbol pattern.

The base station may perform control so that UL is designated by the dynamic SFI for a symbol configured as being valid by the invalid symbol pattern.

### (Third Aspect)

In a third aspect, a case where when invalid symbol pattern information and dynamically notified slot format information (for example, a dynamic SFI) conflict with each other, PUSCH transmission is controlled in consideration of the invalid symbol pattern information and the dynamic SFI will be described.

In a case where an invalid symbol pattern is configured (or applied), a UE may employ at least one of the following option 3-1 to option 3-2 to control the PUSCH transmission when dynamic slot format information (dynamic SFI) is notified.

### <Option 3-1>

When PUSCH transmission being non-valid (or invalid) is notified by at least one of the invalid symbol pattern information and the dynamic SFI for a given symbol, the UE may determine that PUSCH transmission in the symbol is invalid, and may control the PUSCH transmission not to be performed. For example, when a given symbol is notified as being invalid (for example, "1") by the invalid symbol pattern or is notified as DL by the dynamic SFI, the UE may determine that PUSCH transmission in the symbol is invalid. Note that "when notified as DL by the dynamic SFI" may be interpreted as "when notified as DL or Flexible by the dynamic SFI."

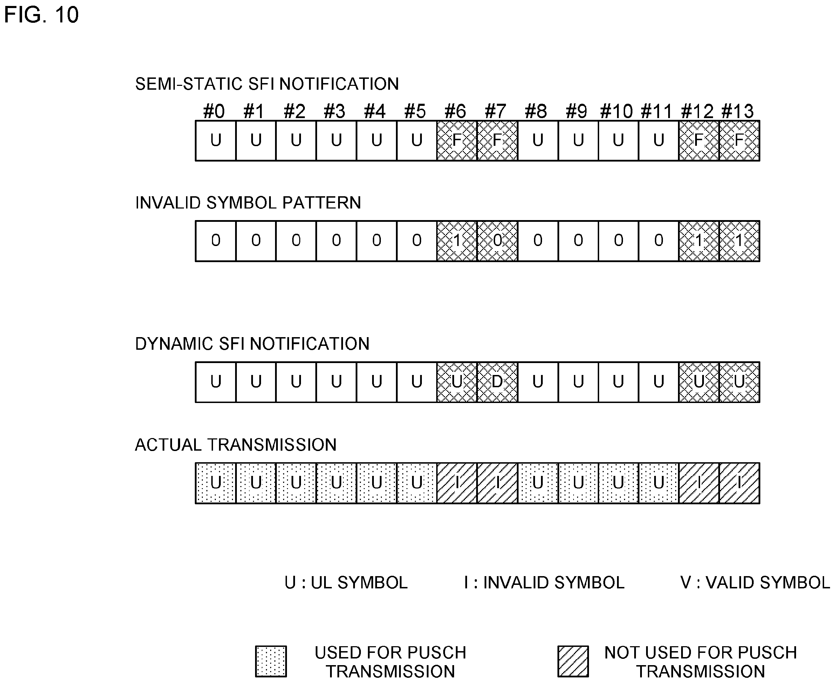

FIG. 10 shows an example of a case where actual transmission is controlled on the basis of semi-statically notified slot format information (semi-static SFI), invalid symbol pattern information, and dynamic slot format information (dynamic SFI).

A base station may configure the slot format (semi-static SFI) and the invalid symbol pattern for the UE by using a higher layer parameter. FIG. 10 shows a case where UL is configured by the semi-static SFI for symbols #0 to #5 and symbols #8 to #11 and Flexible is configured by the semi-static SFI for symbols #6, #7, #12, and #13. FIG. 10 shows a case where valid of PUSCH transmission is configured by the invalid symbol pattern information for symbols #0 to #5 and symbols #7 to #11 and invalidity of PUSCH transmission is configured by the invalid symbol pattern information for symbols #6, #12, and #13.

When UL is notified by the dynamic SFI for symbols determined to be valid (V) (for example, UL symbols #0 to #5, UL symbols #8 to #11, and flexible symbol #7), the UE controls PUSCH transmission to be performed in the symbols. On the other hand, the UE may control PUSCH transmission not to be performed in symbols notified as being invalid (I) by the invalid symbol pattern or notified as DL by the dynamic SFI.

Here, symbols #6, #12, and #13 are notified as UL by the dynamic SFI, but are notified as being invalid (I) by the invalid symbol pattern, and thus the UE may determine that the PUSCH transmission is invalid. Symbol #7 is notified as being valid (V) by the invalid symbol pattern, but is notified as DL by the dynamic SFI, and thus the UE may determine that the PUSCH transmission is invalid.

Note that, for at least one of dynamic grant-based PUSCH transmission and initial transmission after activation in Type 2 configured grant-based PUSCH transmission, PUSCH transmission may be controlled to be performed when Flexible is notified by the dynamic SFI and valid is notified by the invalid symbol pattern.

On the other hand, for at least one of Type 1 configured grant-based PUSCH transmission and transmission other than the initial transmission after activation in Type 2 configured grant-based PUSCH transmission, when Flexible is notified by the dynamic SFI, PUSCH transmission may be controlled not to be performed even when valid is notified by the invalid symbol pattern.

### <Option 3-2>

When PUSCH transmission being valid (or non-invalid) is notified by at least one of the invalid symbol pattern information and the dynamic SFI for a given symbol, the UE may determine that PUSCH transmission in the symbol is valid (or UL symbol), and may control the PUSCH transmission to be performed. For example, when a given symbol is notified as being valid (for example, "0") by the invalid symbol pattern or is notified as UL by the dynamic SFI, the UE may determine that PUSCH transmission in the symbol is valid (or the symbol is UL). Note that "when notified as UL by the dynamic SFI" may be interpreted as "when notified as UL or Flexible by the dynamic SFI."

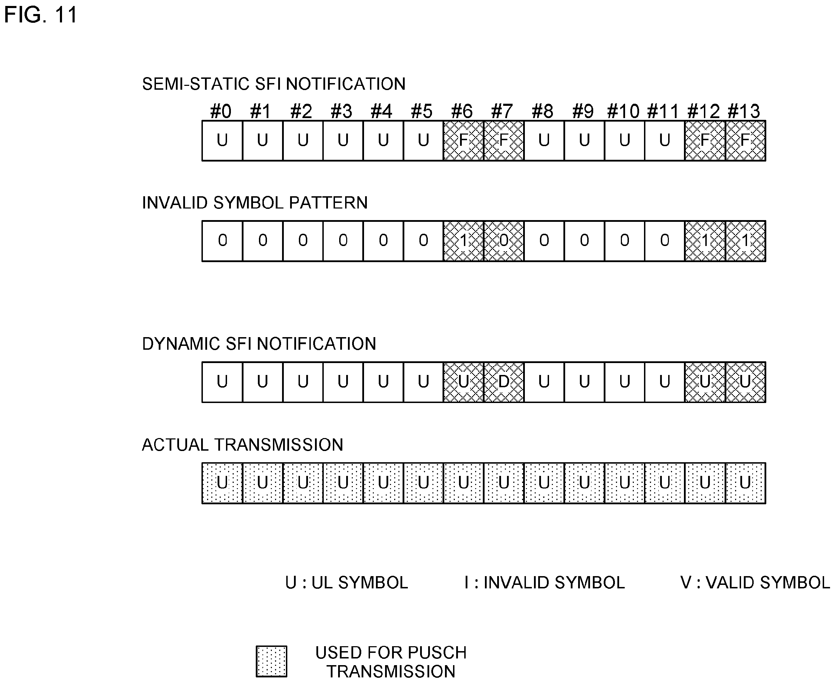

FIG. 11 shows an example of a case where actual transmission is controlled on the basis of semi-statically notified slot format information (semi-static SFI), invalid symbol pattern information, and dynamic slot format information (dynamic SFI).

The base station may configure the slot format (semi-static SFI) and the invalid symbol pattern for the UE by using a higher layer parameter. FIG. 11 shows a case where UL is configured by the semi-static SFI for symbols #0 to #5 and symbols #8 to #11 and Flexible is configured by the semi-static SFI for symbols #6, #7, #12, and #13. FIG. 11 shows a case where valid of PUSCH transmission is configured by the invalid symbol pattern information for symbols #0 to #5 and symbols #7 to #11 and invalidity of PUSCH transmission is configured by the invalid symbol pattern information for symbols #6, #12, and #13.

When UL is notified by the dynamic SFI for symbols determined to be valid (V) (for example, UL symbols #0 to #5, UL symbols #8 to #11, and flexible symbol #7), the UE controls PUSCH transmission to be performed in the symbols. Even for symbols notified as being invalid (I) by the invalid symbol pattern or notified as DL by the dynamic SFI, the UE may control PUSCH transmission to be performed in the symbols notified as UL by the dynamic SFI.

Here, symbols #6, #12, and #13 are notified as being invalid (I) by the invalid symbol pattern, but are notified as UL by the dynamic SFI, and thus the UE may determine that the PUSCH transmission is valid (or the symbols are UL). Symbol #7 is notified as DL by the dynamic SFI, but is notified as being valid (V) by the invalid symbol pattern, and thus the UE may determine that the PUSCH transmission is valid (or the symbol is UL).

Note that, at least one of dynamic grant-based PUSCH transmission and initial transmission after activation in Type 2 configured grant-based PUSCH transmission may, when Flexible is notified by the dynamic SFI, be controlled so as to perform PUSCH transmission even when invalid is notified by the invalid symbol pattern.

On the other hand, for at least one of Type 1 configured grant-based PUSCH transmission and transmission other than the initial transmission after activation in Type 2 configured grant-based PUSCH transmission, PUSCH transmission may be controlled not to be performed when invalid is notified by the invalid symbol pattern and Flexible is notified by the dynamic SFI.

Note that, in a configuration shown in FIG. 11, PUSCH transmission may be controlled not be performed when D is notified by the dynamic SFI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

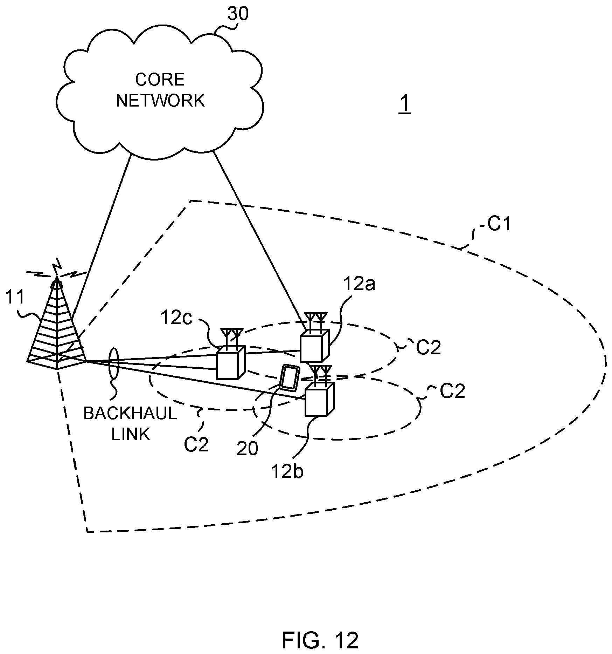

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

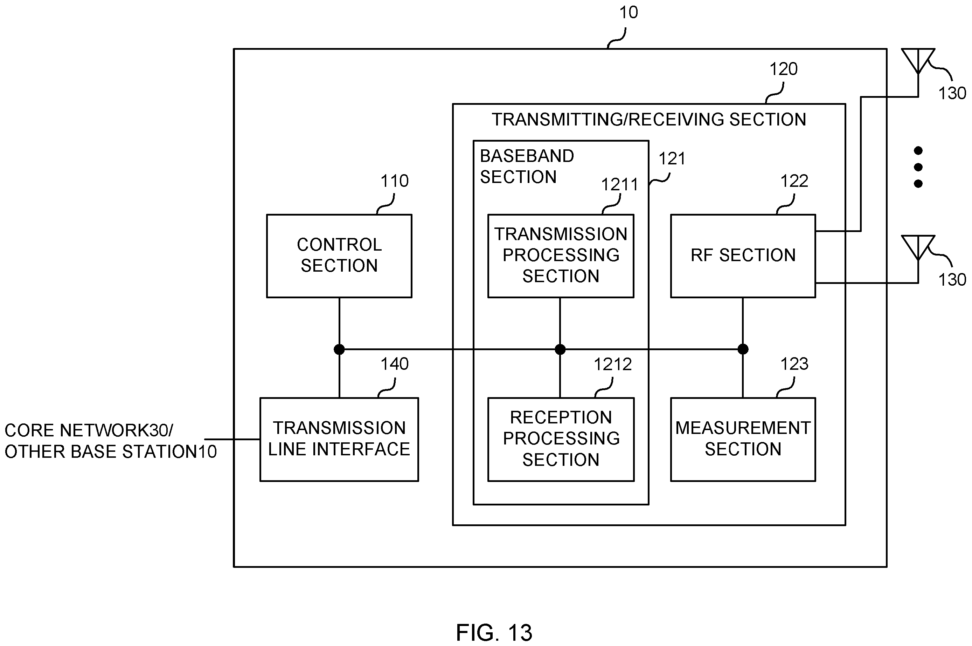

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first information related to a symbol pattern invalid for uplink shared channel transmission and second information related to a slot format notified by downlink control information.

The control section 110 may, when different contents with respect to validity of uplink shared channel transmission in a given symbol is notified by the first information and the second information, control reception of the uplink shared channel in the symbol on the basis of at least one of the first information and the second information.

### (User Terminal)

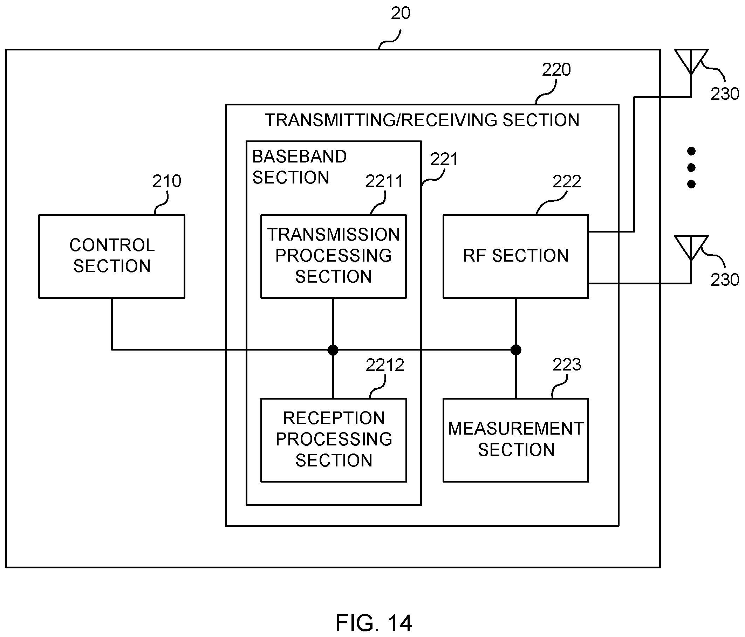

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first information related to a symbol pattern invalid for uplink shared channel transmission and second information related to a slot format notified by downlink control information.

The control section 210 may, when different contents with respect to validity of uplink shared channel transmission in a given symbol is notified by the first information and the second information, control transmission of the uplink shared channel in the symbol on the basis of at least one of the first information and the second information.

The control section 210 may, when UL is designated by the second information for the symbol designated as being invalid by the first information, control transmission of the uplink shared channel to be performed in the symbol.

Alternatively, the control section 210 may, when UL is designated by the second information for the symbol designated as being invalid by the first information, ignore notification of the second information for the symbol.

Alternatively, the control section 210 may, when invalid is notified by the first information or when DL is notified by the second information, control transmission of the uplink shared channel not to be performed in the symbol.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

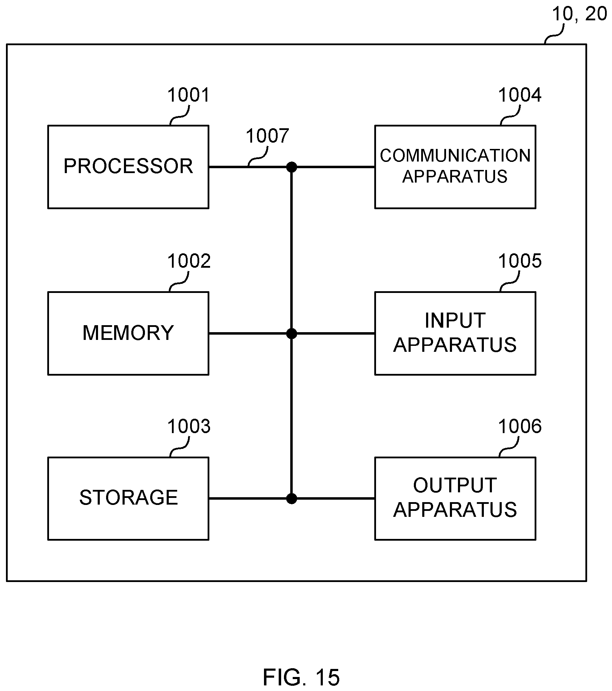

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention is limited solely by the appended claims.

## Claims

1. A terminal (20) comprising:
a receiving section (220) adapted to
receive, by higher layer signaling, an invalid symbol pattern indicating an invalid symbol for uplink shared channel transmission,
receive first downlink control information indicating whether or not the invalid symbol pattern is applied, the first downlink control information being a downlink control information format used for scheduling or activation of an uplink shared channel, and
receive second downlink control information indicating a slot format; and
a control section (210) adapted to control, when application of the invalid symbol pattern is notified by the first downlink control information, and when different contents with respect to validity of the uplink shared channel transmission in a given symbol are notified by the invalid symbol pattern and the slot format indicated by the second downlink control information, the uplink shared channel transmission in the given symbol, based on at least one of the invalid symbol pattern and the slot format indicated by the second downlink control information, wherein
when an uplink is configured, by the slot format indicated by the second downlink control information, for the given symbol configured invalid by the invalid symbol pattern, the control section (210) is adapted to control not to perform the uplink shared channel transmission in the given symbol.

2. The terminal (20) according to claim 1, wherein when a downlink is configured, by the slot format indicated by the second downlink control information, for the given symbol that is not configured invalid by the invalid symbol pattern, the control section (210) is adapted to control not to perform the uplink shared channel transmission in the given symbol.

3. A radio communication method for a terminal, comprising:
receiving, by higher layer signaling, an invalid symbol pattern indicating an invalid symbol for uplink shared channel transmission;
receiving first downlink control information indicating whether or not the invalid symbol pattern is applied, the first downlink control information being a downlink control information format used for scheduling or activation of an uplink shared channel;
receiving second downlink control information indicating a slot format;
when application of the invalid symbol pattern is notified by the first downlink control information, and when different contents with respect to validity of the uplink shared channel transmission in a given symbol are notified by the invalid symbol pattern and the slot format indicated by the second downlink control information, controlling the uplink shared channel transmission in the given symbol, based on at least one of the invalid symbol pattern and the slot format indicated by the second downlink control information; and
when an uplink is configured, by the slot format indicated by the second downlink control information, for the given symbol configured invalid by the invalid symbol pattern, controlling not to perform the uplink shared channel transmission in the given symbol.

4. A base station (10) comprising:
a transmitting section (120) adapted to
transmit, by higher layer signaling, an invalid symbol pattern indicating an invalid symbol for uplink shared channel transmission,
transmit first downlink control information indicating whether or not the invalid symbol pattern is applied, the first downlink control information being a downlink control information format used for scheduling or activation of an uplink shared channel, and
transmit second downlink control information indicating a slot format; and
a control section (110) adapted to control, when application of the invalid symbol pattern is notified by the first downlink control information, and when different contents with respect to validity of the uplink shared channel transmission in a given symbol are notified by the invalid symbol pattern and the slot format indicated by the second downlink control information, reception of the uplink shared channel in the given symbol, based on at least one of the invalid symbol pattern and the slot format indicated by the second downlink control information, wherein
when an uplink is configured, by the slot format indicated by the second downlink control information, for the given symbol configured invalid by the invalid symbol pattern, the control section (110) is adapted to control not to perform the uplink shared channel reception in the given symbol.

5. A system (1) comprising a terminal (20) and a base station (10), wherein
the terminal comprises:
a receiving section (220) adapted to
receive, by higher layer signaling, an invalid symbol pattern indicating an invalid symbol for uplink shared channel transmission,
receive first downlink control information indicating whether or not the invalid symbol pattern is applied, the first downlink control information being a downlink control information format used for scheduling or activation of an uplink shared channel, and
receive second downlink control information indicating a slot format; and
a control section (210) adapted to control, when application of the invalid symbol pattern is notified by the first downlink control information, and when different contents with respect to validity of the uplink shared channel transmission in a given symbol are notified by the invalid symbol pattern and the slot format indicated by the second downlink control information, the uplink shared channel transmission in the given symbol, based on at least one of the invalid symbol pattern and the slot format indicated by the second downlink control information, wherein
when an uplink is configured, by the slot format indicated by the second downlink control information, for the given symbol configured invalid by the invalid symbol pattern, the control section (210) is adapted to control not to perform the uplink shared channel transmission in the given symbol, and
the base station (10) comprises:
a transmitting section (120) adapted to
transmit, by the higher layer signaling, the invalid symbol pattern,
transmit the first downlink control information, and
transmit the second downlink control information; and
a control section (110) adapted to control, when application of the invalid symbol pattern is notified by the first downlink control information, and when different contents with respect to validity of the uplink shared channel transmission in the given symbol are notified by the invalid symbol pattern and the slot format indicated by the second downlink control information, reception of the uplink shared channel in the given symbol, based on at least one of the invalid symbol pattern and the slot format indicated by the second downlink control information.

## Patentansprüche

1. Endgerät (20), umfassend:
einen Empfangsabschnitt (220), der dazu angepasst ist,
durch Signalisierung einer höheren Schicht ein Muster ungültiger Symbole zu empfangen, das ein ungültiges Symbol für eine Übertragung auf dem gemeinsam genutzten Uplink-Kanal angibt,
erste Downlink-Steuerinformation zu empfangen, die angibt, ob das Muster ungültiger Symbole angewendet wird oder nicht, wobei die erste Downlink-Steuerinformation ein Downlink-Steuerinformationsformat ist, das zum Planen oder Aktivieren eines gemeinsam genutzten Uplink-Kanals verwendet wird, und
zweite Downlink-Steuerinformation zu empfangen, die ein Schlitzformat angibt; und
einen Steuerabschnitt (210), der dazu angepasst ist, zu steuern, wenn die Anwendung des Musters ungültiger Symbole durch die erste Downlink-Steuerinformation mitgeteilt wird und wenn unterschiedliche Inhalte in Bezug auf die Gültigkeit der Übertragung auf dem gemeinsam genutzten Uplink-Kanal in einem gegebenen Symbol durch das Muster ungültiger Symbole und das durch die zweite Downlink-Steuerinformation angegebene Schlitzformat mitgeteilt werden, die Übertragung auf dem gemeinsam genutzten Uplink-Kanal in dem gegebenen Symbol auf der Grundlage von mindestens einem aus dem Muster ungültiger Symbole und dem durch die zweite Downlink-Steuerinformation angegebenen Schlitzformat, wobei wenn ein Uplink durch das durch die zweite Downlink-Steuerinformation angegebene Schlitzformat für das gegebene Symbol, das durch das Muster ungültiger Symbole als ungültig ausgebildet ist, ausgebildet ist, der Steuerabschnitt (210) dazu angepasst ist, zu steuern, die Übertragung auf dem gemeinsam genutzten Uplink-Kanal in dem gegebenen Symbol nicht durchzuführen.

2. Endgerät (20) nach Anspruch 1, wobei, wenn ein Downlink durch das durch die zweite Downlink-Steuerinformation angegebene Schlitzformat für das gegebene Symbol, das nicht durch das Muster ungültiger Symbole als ungültig ausgebildet ist, ausgebildet ist, der Steuerabschnitt (210) dazu angepasst ist, zu steuern, die Übertragung auf dem gemeinsam genutzten Uplink-Kanal in dem gegebenen Symbol nicht durchzuführen.

3. Funkkommunikationsverfahren für ein Endgerät, umfassend:
Empfangen, durch Signalisierung einer höheren Schicht, eines Musters ungültiger Symbole, das ein ungültiges Symbol für eine Übertragung auf dem gemeinsam genutzten Uplink-Kanal angibt;
Empfangen erster Downlink-Steuerinformation, die angibt, ob das Muster ungültiger Symbole angewendet wird oder nicht, wobei die erste Downlink-Steuerinformation ein Downlink-Steuerinformationsformat ist, das zum Planen oder Aktivieren eines gemeinsam genutzten Uplink-Kanals verwendet wird;
Empfangen zweiter Downlink-Steuerinformation, die ein Schlitzformat angibt;
wenn die Anwendung des Musters ungültiger Symbole durch die erste Downlink-Steuerinformation mitgeteilt wird und wenn unterschiedliche Inhalte in Bezug auf die Gültigkeit der Übertragung auf dem gemeinsam genutzten Uplink-Kanal in einem gegebenen Symbol durch das Muster ungültiger Symbole und das durch die zweite Downlink-Steuerinformation angegebene Schlitzformat mitgeteilt werden, Steuern der Übertragung auf dem gemeinsam genutzten Uplink-Kanal in dem gegebenen Symbol auf der Grundlage von mindestens einem aus dem Muster ungültiger Symbole und dem durch die zweite Downlink-Steuerinformation angegebenen Schlitzformat; und
wenn ein Uplink durch das durch die zweite Downlink-Steuerinformation angegebene Schlitzformat für das gegebene Symbol, das durch das Muster ungültiger Symbole als ungültig ausgebildet ist, ausgebildet ist, Steuern, die Übertragung auf dem gemeinsam genutzten Uplink-Kanal in dem gegebenen Symbol nicht durchzuführen.

4. Basisstation (10), umfassend:
einen Sendeabschnitt (120), der dazu angepasst ist,
durch Signalisierung einer höheren Schicht ein Muster ungültiger Symbole zu übertragen, das ein ungültiges Symbol für eine Übertragung auf dem gemeinsam genutzten Uplink-Kanal angibt,
erste Downlink-Steuerinformation zu übertragen, die angibt, ob das Muster ungültiger Symbole angewendet wird oder nicht, wobei die erste Downlink-Steuerinformation ein Downlink-Steuerinformationsformat ist, das zum Planen oder Aktivieren eines gemeinsam genutzten Uplink-Kanals verwendet wird, und
zweite Downlink-Steuerinformation zu übertragen, die ein Schlitzformat angibt; und
einen Steuerabschnitt (110), der dazu angepasst ist, zu steuern, wenn die Anwendung des Musters ungültiger Symbole durch die erste Downlink-Steuerinformation mitgeteilt wird und wenn unterschiedliche Inhalte in Bezug auf die Gültigkeit der Übertragung auf dem gemeinsam genutzten Uplink-Kanal in einem gegebenen Symbol durch das Muster ungültiger Symbole und das durch die zweite Downlink-Steuerinformation angegebene Schlitzformat mitgeteilt werden, den Empfang auf dem gemeinsam genutzten Uplink-Kanal in dem gegebenen Symbol auf der Grundlage von mindestens einem aus dem Muster ungültiger Symbole und dem durch die zweite Downlink-Steuerinformation angegebenen Schlitzformat, wobei
wenn ein Uplink durch das durch die zweite Downlink-Steuerinformation angegebene Schlitzformat für das gegebene Symbol, das durch das Muster ungültiger Symbole als ungültig ausgebildet ist, ausgebildet ist, der Steuerabschnitt (110) dazu angepasst ist, zu steuern, den Empfang auf dem gemeinsam genutzten Uplink-Kanal in dem gegebenen Symbol nicht durchzuführen.

5. System (1), umfassend ein Endgerät (20) und eine Basisstation (10), wobei das Endgerät Folgendes umfasst:
einen Empfangsabschnitt (220), der dazu angepasst ist,
durch Signalisierung einer höheren Schicht ein Muster ungültiger Symbole zu empfangen, das ein ungültiges Symbol für eine Übertragung auf dem gemeinsam genutzten Uplink-Kanal angibt,
erste Downlink-Steuerinformation zu empfangen, die angibt, ob das Muster ungültiger Symbole angewendet wird oder nicht, wobei die erste Downlink-Steuerinformation ein Downlink-Steuerinformationsformat ist, das zum Planen oder Aktivieren eines gemeinsam genutzten Uplink-Kanals verwendet wird, und
zweite Downlink-Steuerinformation zu empfangen, die ein Schlitzformat angibt; und
einen Steuerabschnitt (210), der dazu angepasst ist, zu steuern, wenn die Anwendung des Musters ungültiger Symbole durch die erste Downlink-Steuerinformation mitgeteilt wird und wenn unterschiedliche Inhalte in Bezug auf die Gültigkeit der Übertragung auf dem gemeinsam genutzten Uplink-Kanal in einem gegebenen Symbol durch das Muster ungültiger Symbole und das durch die zweite Downlink-Steuerinformation angegebene Schlitzformat mitgeteilt werden, die Übertragung auf dem gemeinsam genutzten Uplink-Kanal in dem gegebenen Symbol auf der Grundlage von mindestens einem aus dem Muster ungültiger Symbole und dem durch die zweite Downlink-Steuerinformation angegebenen Schlitzformat, wobei
wenn ein Uplink durch das durch die zweite Downlink-Steuerinformation angegebene Schlitzformat für das gegebene Symbol, das durch das Muster ungültiger Symbole als ungültig ausgebildet ist, ausgebildet ist, der Steuerabschnitt (210) dazu angepasst ist, zu steuern, die Übertragung auf dem gemeinsam genutzten Uplink-Kanal in dem gegebenen Symbol nicht durchzuführen, und
die Basisstation (10) Folgendes umfasst:
einen Sendeabschnitt (120), der dazu angepasst ist,
durch die Signalisierung einer höheren Schicht das Muster ungültiger Symbole zu übertragen,
die erste Downlink-Steuerinformation zu übertragen, und
die zweite Downlink-Steuerinformation zu übertragen; und
einen Steuerabschnitt (110), der dazu angepasst ist, zu steuern, wenn die Anwendung des Musters ungültiger Symbole durch die erste Downlink-Steuerinformation mitgeteilt wird und wenn unterschiedliche Inhalte in Bezug auf die Gültigkeit der Übertragung auf dem gemeinsam genutzten Uplink-Kanal in einem gegebenen Symbol durch das Muster ungültiger Symbole und das durch die zweite Downlink-Steuerinformation angegebene Schlitzformat mitgeteilt werden, den Empfang auf dem gemeinsam genutzten Uplink-Kanal in dem gegebenen Symbol auf der Grundlage von mindestens einem aus dem Muster ungültiger Symbole und dem durch die zweite Downlink-Steuerinformation angegebenen Schlitzformat.

## Revendications

1. Terminal (20) comprenant :
une section de réception (220) adaptée pour
recevoir, par signalisation des couches supérieures, un motif de symbole invalide indiquant un symbole invalide pour une transmission sur canal partagé en liaison montante,
recevoir des premières informations de commande de liaison descendante indiquant si le motif de symbole invalide est appliqué ou non, les premières informations de commande de liaison descendante étant un format d'informations de commande de liaison descendante utilisé pour la programmation ou l'activation d'un canal partagé en liaison montante, et
recevoir des secondes informations de commande de liaison descendante indiquant un format de créneau ; et
une section de commande (210) adaptée pour commander, lorsque l'application du motif de symbole invalide est notifiée par les premières informations de commande de liaison descendante, et lorsque des contenus différents concernant la validité de la transmission sur canal partagé en liaison montante dans un symbole donné sont notifiés par le motif de symbole invalide et le format de créneau indiqué par les secondes informations de commande de liaison descendante, la transmission sur canal partagé en liaison montante dans le symbole donné, sur la base d'au moins un parmi le motif de symbole invalide et le format de créneau indiqué par les secondes informations de commande de liaison descendante, dans lequel
lorsqu'une liaison montante est configurée, par le format de créneau indiqué par les secondes informations de commande de liaison descendante, pour le symbole donné configuré comme symbole invalide par le motif de symbole invalide, la section de commande (210) est adaptée pour commander de ne pas effectuer la transmission sur canal partagé en liaison montante dans le symbole donné.

2. Terminal (20) selon la revendication 1, dans lequel, lorsqu'une liaison descendante est configurée, par le format de créneau indiqué par les secondes informations de commande de liaison descendante, pour le symbole donné qui n'est pas configuré comme symbole invalide par le motif de symbole invalide, la section de commande (210) est adaptée pour commander de ne pas effectuer la transmission sur canal partagé en liaison montante dans le symbole donné.

3. Procédé de communication radio pour un terminal, comprenant :
la réception, par signalisation des couches supérieures, d'un motif de symbole invalide indiquant un symbole invalide pour une transmission sur canal partagé en liaison montante ;
la réception de premières informations de commande de liaison descendante indiquant si le motif de symbole invalide est appliqué ou non, les premières informations de commande de liaison descendante étant un format d'informations de commande de liaison descendante utilisé pour la programmation ou l'activation d'un canal partagé en liaison montante ;
la réception de secondes informations de commande de liaison descendante indiquant un format de créneau ;
lorsque l'application du motif de symbole invalide est notifiée par les premières informations de commande de liaison descendante, et lorsque des contenus différents concernant la validité de la transmission sur canal partagé en liaison montante dans un symbole donné sont notifiés par le motif de symbole invalide et le format de créneau indiqué par les secondes informations de commande de liaison descendante, la commande de la transmission sur canal partagé en liaison montante dans le symbole donné, sur la base d'au moins un parmi le motif de symbole invalide et le format de créneau indiqué par les secondes informations de commande de liaison descendante ; et
lorsqu'une liaison montante est configurée, par le format de créneau indiqué par les secondes informations de commande de liaison descendante, pour le symbole donné configuré comme symbole invalide par le motif de symbole invalide, la commande de ne pas effectuer la transmission sur canal partagé en liaison montante dans le symbole donné.

4. Station de base (10) comprenant :
une section de transmission (120) adaptée pour
transmettre, par signalisation des couches supérieures, un motif de symbole invalide indiquant un symbole invalide pour une transmission sur canal partagé en liaison montante,
transmettre des premières informations de commande de liaison descendante indiquant si le motif de symbole invalide est appliqué ou non, les premières informations de commande de liaison descendante étant un format d'informations de commande de liaison descendante utilisé pour la programmation ou l'activation d'un canal partagé en liaison montante, et
transmettre des secondes informations de commande de liaison descendante indiquant un format de créneau ; et
une section de commande (110) adaptée pour commander, lorsque l'application du motif de symbole invalide est notifiée par les premières informations de commande de liaison descendante, et lorsque des contenus différents concernant la validité de la transmission sur canal partagé en liaison montante dans un symbole donné sont notifiés par le motif de symbole invalide et le format de créneau indiqué par les secondes informations de commande de liaison descendante, la réception du canal partagé en liaison montante dans le symbole donné, sur la base d'au moins un parmi le motif de symbole invalide et le format de créneau indiqué par les secondes informations de commande de liaison descendante, dans lequel
lorsqu'une liaison montante est configurée, par le format de créneau indiqué par les secondes informations de commande de liaison descendante, pour le symbole donné configuré comme symbole invalide par le motif de symbole invalide, la section de commande (110) est adaptée pour commander de ne pas effectuer la réception du canal partagé en liaison montante dans le symbole donné.

5. Système (1) comprenant un terminal (20) et une station de base (10),
dans lequel
le terminal comprend :
une section de réception (220) adaptée pour
recevoir, par signalisation des couches supérieures, un motif de symbole invalide indiquant un symbole invalide pour une transmission sur canal partagé en liaison montante,
recevoir des premières informations de commande de liaison descendante indiquant si le motif de symbole invalide est appliqué ou non, les premières informations de commande de liaison descendante étant un format d'informations de commande de liaison descendante utilisé pour la programmation ou l'activation d'un canal partagé en liaison montante, et
recevoir des secondes informations de commande de liaison descendante indiquant un format de créneau ; et
une section de commande (210) adaptée pour commander, lorsque l'application du motif de symbole invalide est notifiée par les premières informations de commande de liaison descendante, et lorsque des contenus différents concernant la validité de la transmission sur canal partagé en liaison montante dans un symbole donné sont notifiés par le motif de symbole invalide et le format de créneau indiqué par les secondes informations de commande de liaison descendante, la transmission sur canal partagé en liaison montante dans le symbole donné, sur la base d'au moins un parmi le motif de symbole invalide et le format de créneau indiqué par les secondes informations de commande de liaison descendante, dans lequel
lorsqu'une liaison montante est configurée, par le format de créneau indiqué par les secondes informations de commande de liaison descendante, pour le symbole donné configuré comme symbole invalide par le motif de symbole invalide, la section de commande (210) est adaptée pour commander de ne pas effectuer la transmission sur canal partagé en liaison montante dans le symbole donné, et
la station de base (10) comprend :
une section de transmission (120) adaptée pour
transmettre, par la signalisation des couches supérieures, le motif de symbole invalide,
transmettre les premières informations de commande de liaison descendante, et
transmettre les secondes informations de commande de liaison descendante ; et
une section de commande (110) adaptée pour commander, lorsque l'application du motif de symbole invalide est notifiée par les premières informations de commande de liaison descendante, et lorsque des contenus différents concernant la validité de la transmission sur canal partagé en liaison montante dans le symbole donné sont notifiés par le motif de symbole invalide et le format de créneau indiqué par les secondes informations de commande de liaison descendante, la réception du canal partagé en liaison montante dans le symbole donné, sur la base d'au moins un parmi le motif de symbole invalide et le format de créneau indiqué par les secondes informations de commande de liaison descendante.
